# EUROPEAN PATENT APPLICATION

(11) **EP 4 242 455 A2**
(43) Date of publication of application: **13.09.2023**
(21) Application number: 23185597.4
(22) Date of filing: 07.12.2018
(51) Int. Cl.: F03D 80/60

(54) **A WIND TURBINE NACELLE COOLING SYSTEM**

(62) Divisional of application: 18211111.2
(71) Applicant: Nissens Cooling Solutions A/S, 8700 Horsens (DK)
(72) Inventor: Jensen, Mikkel, 8700 Horsens (DK); MØRKHOLT, Morten, 8700 Horsens (DK)
(74) Representative: Dragsted Partners A/S

(57) **Abstract**

The present invention relates to a wind turbine nacelle mounted cooling system configured to be mounted on a first face of a nacelle of a wind turbine, the nacelle being rotably connected with a tower so that the nacelle is positioned in relation to a wind direction, the first face having a longitudinal extension substantially corresponding to the wind direction, the cooling system comprising: a projected wind area when in operation extending substantially in a perpendicular direction from the first face, the projected wind area is defined by at least a first cooling module having a first cooling area, wherein at least a part of the first cooling area is arranged with an angle different from 90 degrees in relation to the longitudinal extension of the first face of the nacelle.

## Description

The present invention relates to a wind turbine nacelle mounted cooling system configured to be mounted on a first face of a nacelle of a wind turbine, the nacelle being rotably connected with a tower so that the nacelle is positioned in relation to a wind direction, the first face having a longitudinal extension substantially corresponding to the wind direction.

A wind turbine converts wind power into electrical energy by using a generator placed among other components in the nacelle of the wind turbine. When the generator converts energy, the air surrounding the components is heated and the components themselves are thus also heated.

When the components are heated, the efficiency with which the conversion occurs is substantially decreased. In order to cool the components, the walls and the air surrounding the components are cooled down by means of a cooling device positioned on top of the nacelle. Thus, the cool outside air passes through the cooling device and cools a cooling fluid within the cooling device, which is subsequently used to cool the walls of the components in the nacelle or the air surrounding the components.

Since the sizes and yield of the wind turbines increases, the cooling need increases as well which influences on the sizes of the cooling devices to be positioned on the nacelles. Even though the sizes of the nacelle increase as well, it may be difficult to provide cooling devices having sufficient cooling capacity on the nacelles.

It is an object of the present invention to wholly or partly overcome the above disadvantages and drawbacks of the prior art. More specifically, it is an object to provide an improved wind turbine nacelle mounted cooling system having enhanced cooling effect.

The above objects, together with numerous other objects, advantages and features, which will become evident from the below description, are accomplished by a solution in accordance with the present invention by a wind turbine nacelle mounted cooling system configured to be mounted on a first face of a nacelle of a wind turbine, the nacelle being rotably connected with a tower so that the nacelle is positioned in relation to a wind direction, the first face having a longitudinal extension substantially corresponding to the wind direction, the cooling system comprising:
a projected wind area when in operation extending substantially in a perpendicular direction from the first face, the projected wind area is defined by at least a first cooling module having a first cooling area,
wherein at least a part of the first cooling area is arranged with an angle different from 90 degrees in relation to the longitudinal extension of the first face of the nacelle.

Also, the entire first cooling area may be arranged with an angle different from 90 degrees in relation to the longitudinal extension.

Moreover, the first face may have a transverse extension being perpendicular to the longitudinal extension, the cooling system comprises a second cooling module having a second cooling area, the first cooling module and the second cooling module being arranged adjacent to each other in the transverse extension.

Further, the second cooling area may be arranged with an angle different from 90 degrees in relation to the longitudinal extension of the first face of the nacelle.

Additionally, the first cooling area and the second cooling area may have an effective cooling area, the effective cooling area being larger than the projected wind area.

Furthermore, the effective cooling area may be 3% larger than the projected wind area, preferably 5% larger than the projected wind area, more preferably 10% larger than the projected wind area, most preferably more than 15% larger than the projected wind area

In addition, the angle may be different from a plane being perpendicular to the longitudinal extension of the first face of the nacelle with between 2 to 88 degrees, preferably between 5 to 75 degrees, more preferably between 10 to 65 degrees. Most preferably between 15 to 55 degrees.

Moreover, the angle of the first cooling area and the angle of the second cooling area may define a mutual angle between the first cooling area and second cooling area.

Also, the first cooling area and the second cooling area when being angled may define a V when seen from above.

Further, a plurality of cooling modules may be arranged adjacent to each other in the transverse extension of the first face.

Additionally, each cooling module may have a cooling area, each cooling area having an angle different from 90 degrees in relation to the longitudinal extension of the first face of the nacelle.

Furthermore, the plurality of cooling modules may define a zig-zag pattern when seen from above.

In addition, the first cooling area may have a different angle in relation to the second cooling area.

Moreover, all cooling areas of the cooling modules may have different angles in relation to the longitudinal extension of the first face.

Also, the first cooling module and the second cooling module may each be connected with the first face.

Further, two adjacent cooling modules may be connected to each other by one or more connection parts.

Additionally, a space may be created between two adjacent cooling modules, wherein an additional cooling module is arranged in the space.

In addition, each cooling module may be connected with a cooling circuit configured to circulate a cooling medium so that the cooling medium may flow in the cooling module and the cooling circuit.

Moreover, the cooling system may be a passive cooling system.

Furthermore, the angle of the cooling area may be adjusted under operation.

Also, the angle of the cooling area may be different along the cooling area.

Further, the first cooling area may have a curved extension, the curved extension having a plurality of tangent lines along the curved extension, each tangent line defining an angle being different from 90 degrees in relation to the longitudinal extension of the first face of the nacelle.

Finally, the present invention also relates to a wind turbine having a cooling system.

The invention and its many advantages will be described in more detail below with reference to the accompanying schematic drawings, which for the purpose of illustration show some non-limiting embodiments and in which:
Fig. 1 shows a wind turbine with a wind turbine nacelle mounted cooling system according to the invention,
Fig. 2a shows a projected wind area of the cooling system,
Fig. 2b shows a cooling system positioned on the first face of the nacelle,
Fig. 3 shows a cooling system positioned on the first face of the nacelle,
Figs. 4-5 show another cooling system positioned on the first face of the nacelle,
Figs. 6-7 show an additional cooling system positioned on the first face of the nacelle,
Figs. 8-12 show different configurations of the cooling system, and
Figs. 13-15 show yet another cooling system positioned on the first face of the nacelle.

All the figures are highly schematic and not necessarily to scale, and they show only those parts which are necessary in order to elucidate the invention, other parts being omitted or merely suggested.

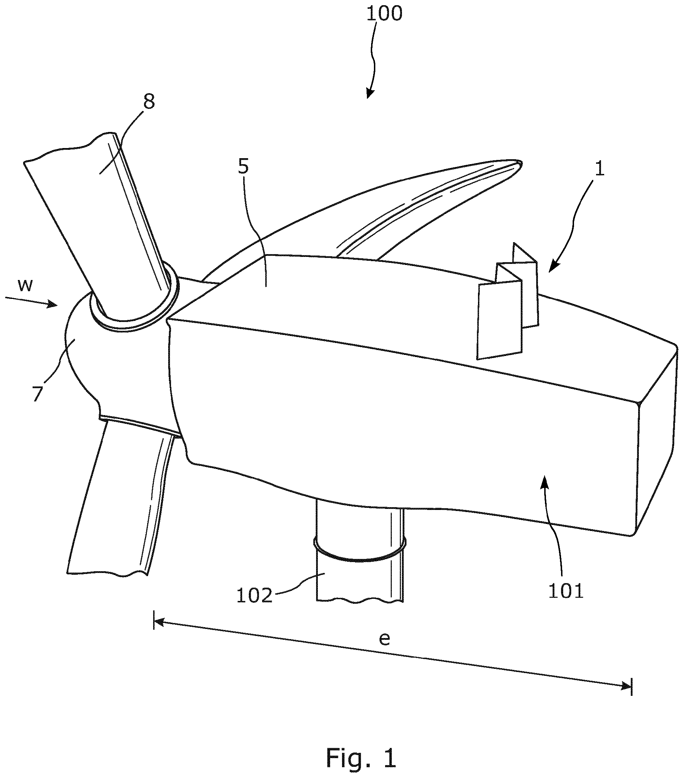

Fig. 1 shows a perspective view of a wind turbine 100 comprising a nacelle 101 and a wind turbine nacelle mounted cooling system 1. The nacelle 101 is situated on top of a tower 102 and has a front facing a hub 7 in which a plurality of rotor blades 8, normally three blades, is fastened. The nacelle 101 being rotably connected with the tower 102, so that the nacelle may be positioned in relation to a wind direction w. The wind direction corresponds to the wind direction of the ambient passive wind. The nacelle 101 may house a generator and other components used for driving the conversion process of wind energy to electricity - also called the drive train. When producing electricity, the drive train produces a lot of heat, resulting in a less effective conversion process.

In order to cool the components and other parts of the nacelle, the wind turbine nacelle mounted cooling system 1 is configured to be mounted on a first face 5 of the nacelle 101 of a wind turbine 100. The first face 5 having a longitudinal extension e substantially corresponding to the wind direction w.

In the present embodiment, the first face 5 corresponds to a top face of the nacelle. In another embodiment, the first face may be one of the side faces of the nacelle. In addition, the wind turbine nacelle mounted cooling system may be mounted on one or more of the top and/or side faces of the nacelle.

Ambient passive wind flowing along a longitudinal extension e of the first face 5 of the nacelle 101 flows in through at least one cooling area of the cooling system 1 and cools a fluid within the cooling system circulating through the cooling area. The cooled fluid exchanges heat with the parts of the nacelle 101 or equipment to be cooled. The cooling system may be placed in front of, in the middle of or in the back of the nacelle, and as mentioned both on the top face and/or on the side faces.

The present invention will mainly be described in connection with an upwind wind turbine, i.e. a wind turbine where the nacelle 101 is placed downwind from the wind turbine blades 8. However, the invention may also advantageously be implemented in a downwind wind turbine, i.e. a wind turbine where the nacelle is placed upwind from the wind turbine blades.

The present invention is mainly described as the cooling system is a passive cooling system. However, the present invention may also be used in connection with an active cooling system.

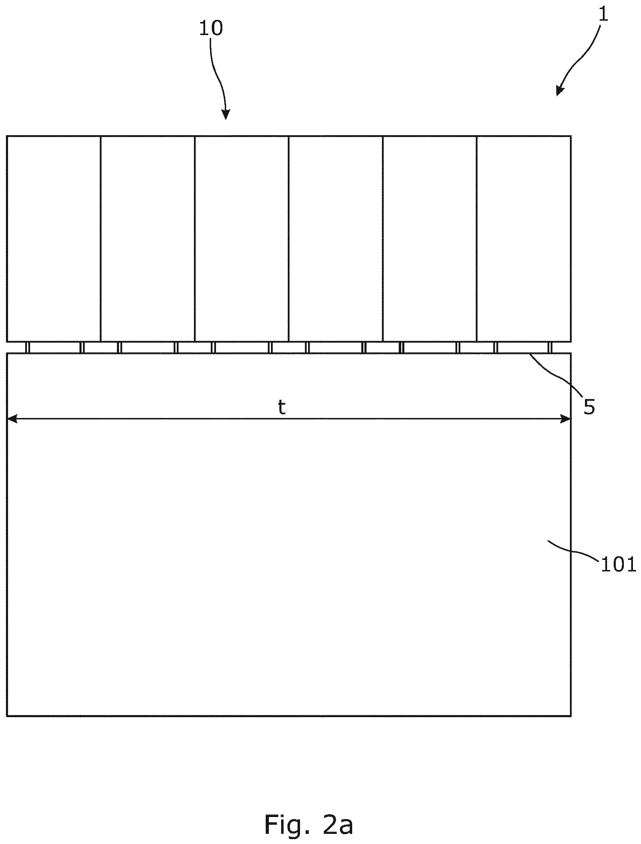

The cooling system 1 has a projected wind area 10 when in operation extending substantially in a perpendicular direction from the first face 5, the projected wind area is defined by at least a first cooling module having a first cooling area. In Fig. 2a a projected wind area 10 is shown, in the present embodiment the cooling system 1 comprises six cooling modules arranged adjacent to each other along a transverse extension t of the first face 5. The six cooling modules defines a two-dimensional area by projecting its shape on to an arbitrary plane as seen in Fig. 2a. In the prior art solutions, the projected wind area of the cooling system correspond to the effective cooling area of the cooling system.

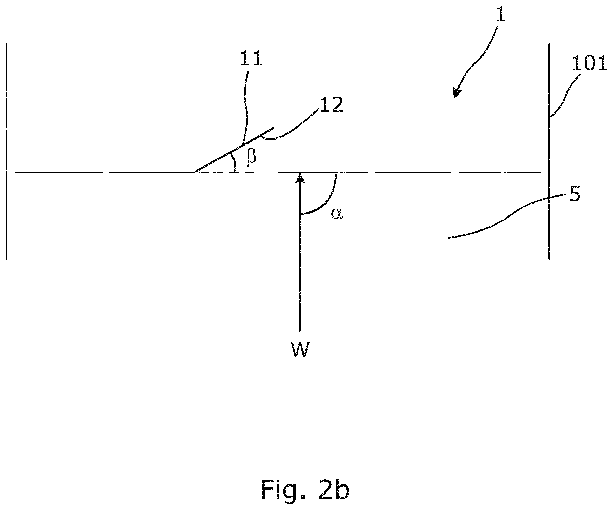

According to the invention, the projected wind area is defined by at least a first cooling module 11 having a first cooling area 12. In Fig. 2b a wind turbine nacelle mounted cooling system 1 is shown in a top view. The wind direction w substantially corresponds to the longitudinal extension of the first face 5. Normally, the cooling system extends perpendicular to the wind direction w so that the cooling area of the cooling system extends 90 degrees to the wind direction w as indicated by the angle α in Fig. 2b. At least a part of the first cooling area 12 is arranged with an angle β different from 90 degrees in relation to the longitudinal extension, i.e. the wind direction w, of the first face 5 of the nacelle 101 as shown in Fig. 2b. In Fig. 2b, the entire first cooling area 12 is arranged with an angle different from 90 degrees in relation to the longitudinal extension, i.e. wind direction w.

By angling the first cooling area 12 the effective cooling area of the cooling system is larger than the projected wind area and thereby the cooling system provides enhanced cooling efficiency. In addition, it may be possible to have additional cooling modules positioned on the first face when one or more of the cooling areas of the cooling modules are angled compared to is the cooling modules were positioned as in the prior art solutions.

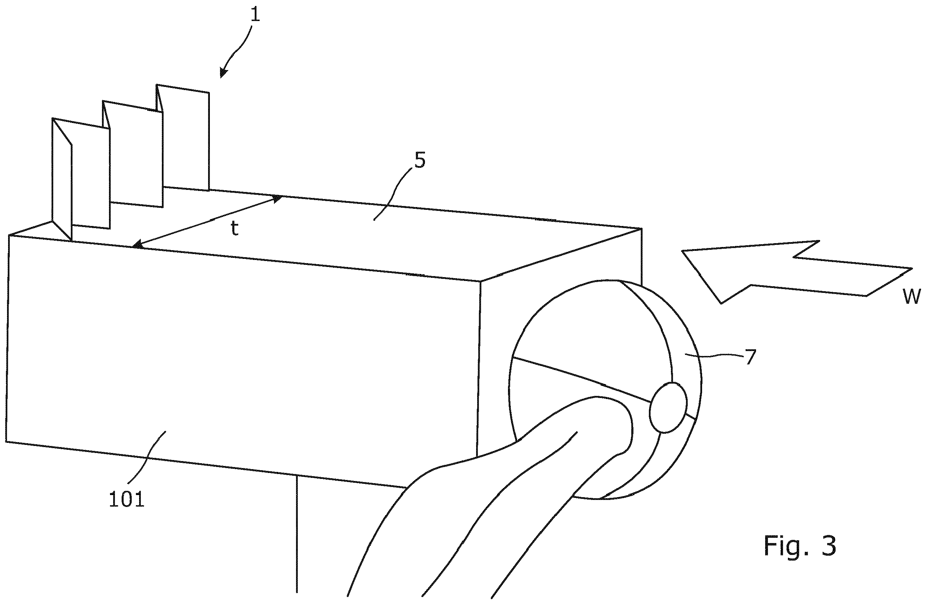

Fig. 3 shows an embodiment of the wind turbine nacelle mounted cooling system 1 arranged on the first face 5 of the nacelle 101. The cooling system 1 is arranged at the end of the nacelle being opposite the hub 7. In the present embodiment, a plurality of cooling modules are arranged adjacent to each other in the transverse extension t of the first face 5. Each cooling module has a cooling area, each cooling area having an angle different from 90 degrees in relation to the longitudinal extension, i.e. wind direction w, of the first face 5 of the nacelle 101. In the present embodiment, there are six cooling modules arranged adjacent to each other so that two adjacent cooling modules form a V. By angling all cooling areas, it is possible to have an additional cooling module in the transverse extension t compared to the known solutions whereby the effective cooling area of the cooling system is larger than the projected wind area.

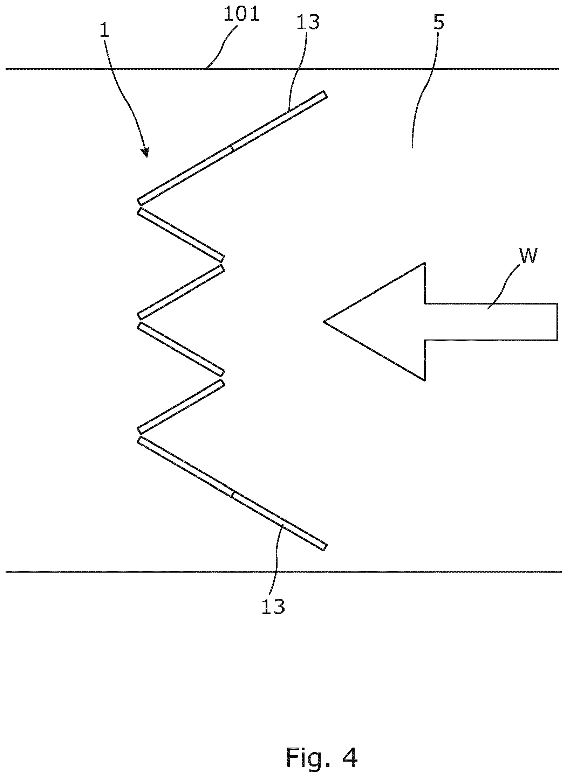

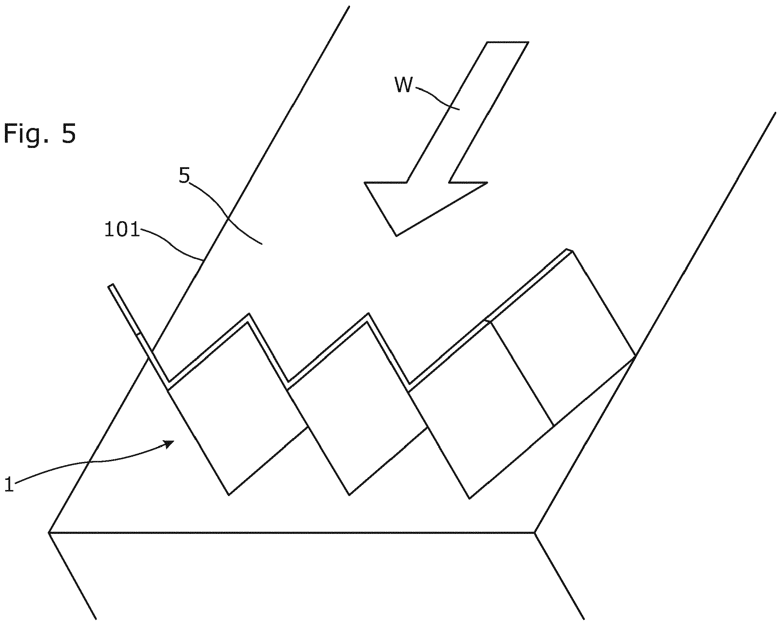

Figs. 4 and 5 show another embodiment of the wind turbine nacelle mounted cooling system 1 arranged on the first face 5 of the nacelle 101. In Fig. 4, the cooling system 1 is shown in a top view and in Fig. 5 in a perspective view. The present embodiment is similar to the embodiment described in relation to Fig. 3 however, in addition to the six cooling modules all having cooling areas being angled in relation to the wind direction w, two additional cooling modules 13 are arranged in the prolongation of the outermost cooling modules. The two additional cooling modules 13 are extending towards the wind direction with an angle different from 90 degrees in relation to the wind direction.

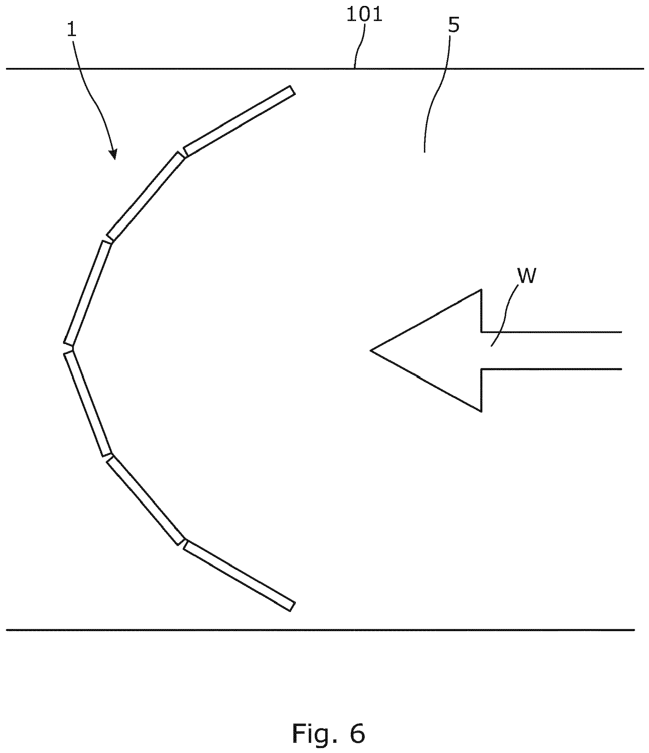

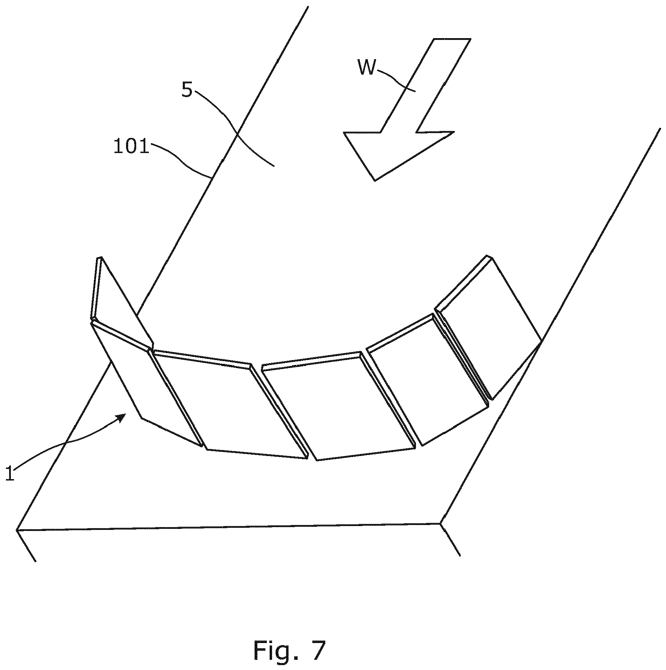

Figs. 6 and 7 show another embodiment of the wind turbine nacelle mounted cooling system 1 arranged on the first face 5 of the nacelle 101. In Fig. 6, the cooling system 1 is shown in a top view and in Fig. 7 in a perspective view. In the present embodiment, the wind turbine nacelle mounted cooling system 1 comprises six cooling modules arranged adjacent to each other. The cooling modules are arranged so as to substantially provide a semi-circle as seen in Fig. 6.

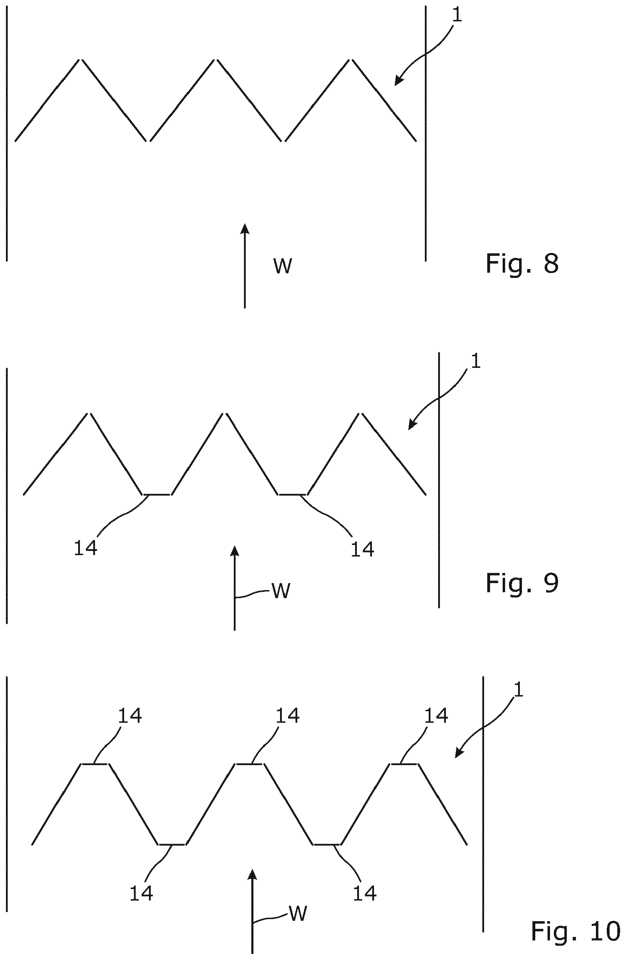

Figs. 8-12 show different configurations of the cooling system in a top view. Fig. 8 is similar to the embodiment shown in Fig. 3 wherein six cooling modules are arranged adjacent to each other so that two adjacent cooling modules form a V. The six cooling modules define a zig-zag pattern when seen from above.

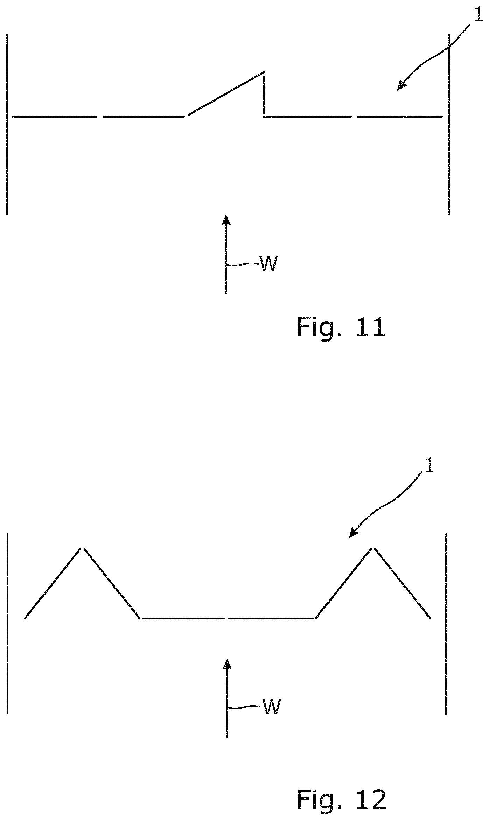

In Figs. 9 and 10, two different configurations are shown. In Fig. 9, two additional cooling modules 14 are arranged between the V-configurations shown in Fig. 8. The additional cooling modules 14 have a smaller cooling area than the adjacent cooling modules. In Fig. 10, five additional cooling modules 14 have been arranged between the angled cooling modules. Fig. 11 substantially corresponds to the embodiment described in connection with Fig. 2b. In Fig. 12, yet another configuration is shown where two cooling modules have been arranged between two set of angled cooling modules.

As indicated, many configurations are feasible by the inventive idea in angling one or more cooling areas of one or more cooling modules. By activating the longitudinal extension of the first face, it is possible to enhance the effective cooling areas of the cooling modules compared to the known solutions wherein the cooling modules are arranged adjacent to each other in the transverse extension of the first face with an angle being 90 degrees to the longitudinal extension, i.e. wind direction w, of the first face. Furthermore, it is obtained that standard cooling modules having predetermined sizes may be used and at least one more cooling module may be arranged on the first face by using both the longitudinal and transverse extensions of the first face.

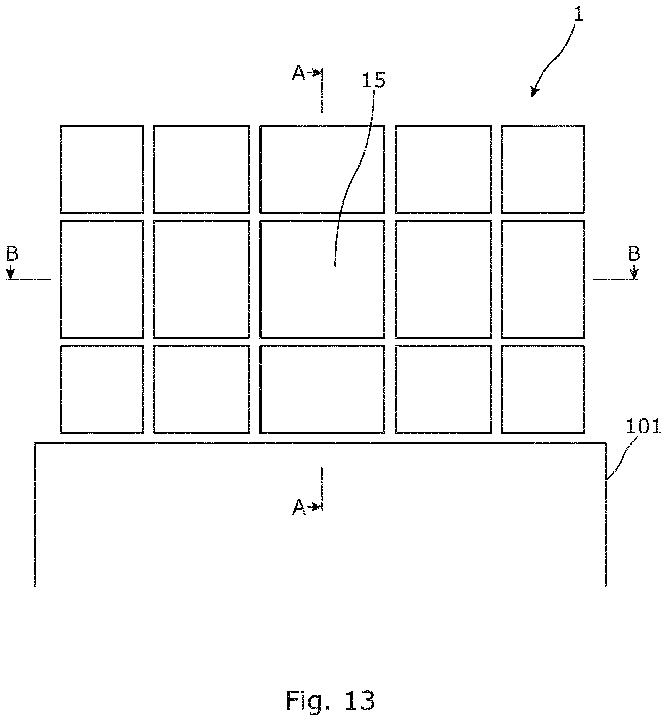

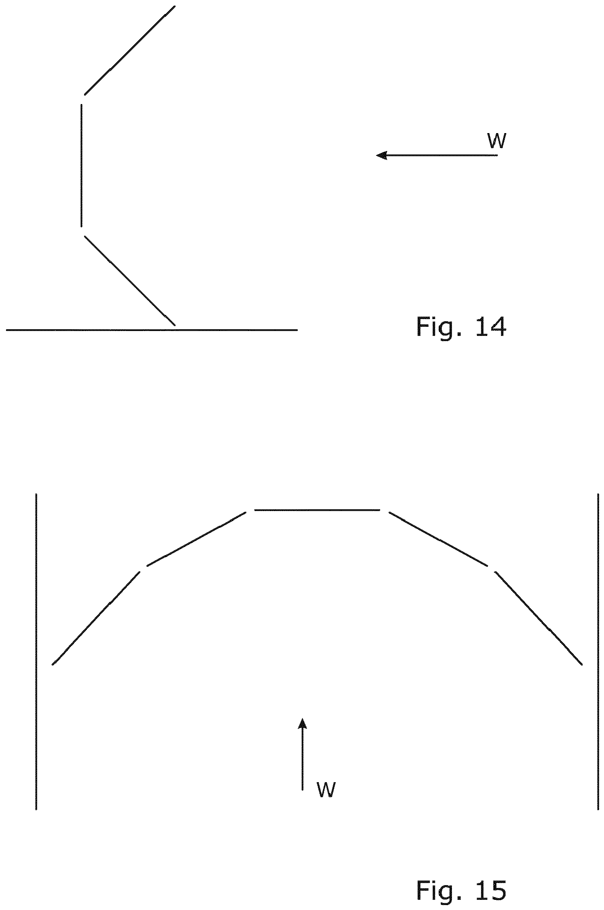

Figs. 13-15 show another embodiment of wind turbine nacelle mounted cooling system 1. In the present embodiment, the cooling system 1 has partly the form as a satellite dish. In the present embodiment, the cooling system comprises 15 cooling modules each having a cooling area. All cooling areas having a angle being different from 90 degrees in relation to the wind direction except the cooling area 15. In Fig. 13, the projected wind area of the cooling system is shown. In Fig. 14, a cross-sectional view is shown along the A-A line in Fig. 13 and in Fig. 15 a cross-sectional view is shown along the B-B line in Fig. 13. Fig. 14 shows in a side view the satellite dish and Fig. 15 shows in a top view satellite dish.

The first cooling area may have a curved extension, the curved extension having a plurality of tangent lines along the curved extension, each tangent line defining an angle being different from 90 degrees in relation to the longitudinal extension of the first face of the nacelle. In addition, the first cooling area may have a double curved extension.

The first cooling module and the second cooling module may each be connected with the first face. Furthermore, two adjacent cooling modules may be connected to each other by one or more connection parts. Each cooling module may be connected with a cooling circuit configured to circulate a cooling medium so that the cooling medium may flow in the cooling module and the cooling circuit. The different cooling modules may be fluidly connected with each other.

### Computational fluid dynamics (CFD) simulation

A CFD simulation has been performed wherein two different configurations of a cooling system according to the present invention have been compared to a known cooling system.

The known cooling system is a standard configuration of cooling modules arranged adjacent to each other in a transverse direction of the nacelle. Each cooling module has a cooling area arranged perpendicular to the wind direction. Hence, the effective cooling area of the standard configuration is equal to the projected wind area. The standard configuration had 264.2 KW in cooling effect.

The first simulation configuration had a configuration substantially similar to the embodiment shown in Fig. 4 according to the invention. The first simulation configuration had 344 KW in cooling effect.

The second simulation configuration had a configuration substantially similar to the embodiment shown in Fig. 3 according to the invention. The second simulation configuration had 333 KW in cooling effect.

Thus, the standard configuration and the first and second analysis configurations have substantially the same projected wind area. However, the first and second simulation configurations had considerable larger effective cooling area compared to the standard configuration.

Hence, the first simulation configuration had approximately a 30% increase in effective cooling area compared to the standard configuration, and the second simulation configuration had approximately a 26% increase in effective cooling area compared to the standard configuration.

Accordingly, by applying the present invention it was possible to increase the effective cooling area considerably compared to a standard configuration.

Although the invention has been described in the above in connection with preferred embodiments of the invention, it will be evident for a person skilled in the art that several modifications are conceivable without departing from the invention as defined by the following claims.

## Claims

1. A wind turbine nacelle mounted cooling system configured to be mounted on a first face of a nacelle of a wind turbine, the nacelle being rotably connected with a tower so that the nacelle is positioned in relation to a wind direction, the first face having a longitudinal extension substantially corresponding to the wind direction, the cooling system comprising:
a projected wind area when in operation extending substantially in a perpendicular direction from the first face, the projected wind area is defined by at least a first cooling module having a first cooling area,
wherein at least a part of the first cooling area is arranged with an angle different from 90 degrees in relation to the longitudinal extension of the first face of the nacelle.

2. A wind turbine nacelle mounted cooling system according to claim 1, wherein the first face has a transverse extension being perpendicular to the longitudinal extension, the cooling system comprises a second cooling module having a second cooling area,
the first cooling module and the second cooling module being arranged adjacent to each other in the transverse extension.

3. A wind turbine nacelle mounted cooling system according to claim 2, wherein the second cooling area is arranged with an angle different from 90 degrees in relation to the longitudinal extension of the first face of the nacelle.

4. A wind turbine nacelle mounted cooling system according to claim 2 and/or 3, wherein the first cooling area and the second cooling area have an effective cooling area, the effective cooling area being larger than the projected wind area.

5. A wind turbine nacelle mounted cooling system according to claim 4, wherein the effective cooling area is 3% larger than the projected wind area, preferably 5% larger than the projected wind area, more preferably 10% larger than the projected wind area, most preferably more than 15% larger than the projected wind area.

6. A wind turbine nacelle mounted cooling system according to any of the preceding claims, wherein the angle is different from a plane being perpendicular to the longitudinal extension of the first face of the nacelle with between 2 to 88 degrees, preferably between 5 to 75 degrees, more preferably between 10 to 65 degrees. Most preferably between 15 to 55 degrees.

7. A wind turbine nacelle mounted cooling system according to claim 3, wherein the angle of the first cooling area and the angle of the second cooling area define a mutual angle between the first cooling area and second cooling area.

8. A wind turbine nacelle mounted cooling system according to any of the preceding claims, wherein a plurality of cooling modules are arranged adjacent to each other in the transverse extension of the first face.

9. A wind turbine nacelle mounted cooling system according to claim 7, wherein each cooling module has a cooling area, each cooling area having an angle different from 90 degrees in relation to the longitudinal extension of the first face of the nacelle.

10. A wind turbine nacelle mounted cooling system according to any of the preceding claims, wherein a space is created between two adjacent cooling modules, wherein an additional cooling module is arranged in the space.

11. A wind turbine nacelle mounted cooling system according to any of the preceding claims, wherein each cooling module is connected with a cooling circuit configured to circulate a cooling medium so that the cooling medium may flow in the cooling module and the cooling circuit.

12. A wind turbine nacelle mounted cooling system according to any of the preceding claims, wherein the cooling system is a passive cooling system.

13. A wind turbine nacelle mounted cooling system according to any of the preceding claims, wherein the angle of the cooling area can be adjusted under operation.

14. A wind turbine nacelle mounted cooling system according to any of the preceding claims, wherein the first cooling area has a curved extension, the curved extension having a plurality of tangent lines along the curved extension, each tangent line defining an angle being different from 90 degrees in relation to the longitudinal extension of the first face of the nacelle.

15. A wind turbine having a cooling system according to any of the preceding claims.
